# EUROPEAN PATENT SPECIFICATION

(11) **EP 2 655 941 B1**
(45) Date of publication and mention of the grant of the patent: **26.08.2015**
(21) Application number: 11788174.8
(22) Date of filing: 28.11.2011
(51) Int. Cl.: F16J 15/00, F16J 15/16, F16J 15/32, F16J 15/46, F16L 27/093

(54) **ROTARY SEAL ARRANGEMENT**
ROTATIONSDICHTUNGSANORDNUNG
DISPOSITIF DE JOINT TOURNANT

(30) Priority: 23.12.2010 GB 201021931
(43) Date of publication of application: 30.10.2013
(73) Proprietor: AGCO International GmbH, 8212 Neuhausen am Rheinfall (CH)
(72) Inventor: HONZEK, Robert, 87647 Unterthingau OT Oberthingau (DE); MULLER, Thomas, 87616 Marktoberdorf (DE); SCHMIDL, Thomas, 87672 Roßhaupten (DE); STOIBER, Martin, 87616 Marktoberdorf (DE)
(74) Representative: AGCO Intellectual Property Department
(86) International application number: PCT/EP2011/071148
(87) International publication number: WO 2012/084412

(56) References cited:
- EP-A1- 0 075 723
- EP-A1- 0 410 723
- EP-A1- 1 731 804
- JP-A- 49 021 550
- US-A- 4 434 833
- US-A- 4 804 027

## Description

The invention relates to a rotary seal arrangement having a rotatable component supported within a machine component, wherein the machine component forms a housing structure for a sealing means which acts to seal off a high pressure area between the components to allow the passage of high pressure fluid therebetween.

Generic rotary seals are used, for example, for sealing off rotary feed-throughs. The high-pressure area is then formed by a rotary feed-through area between the two components. The rotary seal is thereby also referred to as a rotary feed-through seal. The rotary feed-through allows fluids, i.e. gases of liquids, to pass between the fixed machine component and a rotatable component in a sealed manner. Usually, the fixed machine component is designed with the housing structure for the seal and the rotatable component is designed as a shaft rotatably supported therein. Rotary feed-throughs of this kind are used, for example, in hydraulic applications or for feeding in hot gas to heat a roller.

Known rotary feed-through seals are, for example, designed as sliding rings (rotating mechanical seals), wherein the sliding ring usually has a sealing ring made of polytetrafluoroethylene (PTFE).

An example of a rotary feed-through seal is designed in such a way that as little as possible of the fluid under excess pressure gets from the high pressure rotary feed-through area to the surrounding low-pressure area, i.e. that there is little leakage. However, the less leakage there is, the greater is the frictional force occurring between the sealing area of the rotatably supported machine component and the rotary feed-through seal. The abrasive wear of the rotary feed-through seal is correspondingly increased and a relatively large amount of drive energy is expended against the said frictional force. In particular, with shafts rotating with high rotational speeds and with fluids under high pressure, the service life of a known rotary feed-through seal of this kind is therefore low.

Furthermore, the rotary seal must be prevented from rotating concurrently with the shaft. To this end, the sealing ring is often pressed into a holding element manufactured from steel, for example, and also ring-shaped. The holding element is fitted tight against torsion in the housing structure for the seal. A rotary feed-through seal of this kind is, however, relatively complicated to produce. For a fitting which is tight against torsion, anti-twist protection must be provided on the housing structure for the seal is not possible due to the rigidity of the holding element.

A rotating seal according to the preamble of claim 1 is disclosed in EP 0 410 723 A1.

The object forming the basis of the invention is to provide a rotary seal arrangement which avoids the disadvantages of the prior art, wherein, in particular, the rotary seal is to be able to easily fit between the components. This object is achieved by the subject-matter claimed in claim 1 and the dependent claims constitute preferred embodiments of the invention.

Thus in accordance with the present invention there is provided a rotary seal arrangement having a rotatable component supported within a machine component, the machine component forming a housing structure for a sealing means which acts to seal off a high-pressure area between the components to allow the passage of high pressure fluid therebetween, the seal arrangement being characterised by including the combination of a holding element for mounting in the machine component to support spaced sealing members therein to define said high pressure area therebetween and support elements which extend generally radially relative to the rotatable component to provide support for the sealing members against the high pressure fluid, the holding element and support elements forming a cartridge like arrangement which encloses the sealing members.

Such a seal arrangement is particularly suitable for use where the rotatable component is formed as a rotatable shaft supported in the machine component with the holding element and sealing members are arranged around the shaft. One such application is a part of a tyre pressure changing system on an agricultural or commercial vehicle, such as a tractor, so that the tyre pressure can be increased for an intended driving on an asphalt road compared to the tyre pressure for driving on a soft field.

The cartridge like arrangement can be particularly easily fitted in its operation position in the machine component.

The holding element and support elements may be held together in the cartridge-like arrangement by resilient abutment bodies located between each sealing member and its associated support element, the abutment bodies being bonded to the holding element and the associated support elements.

The holding element may be a sleeve-like element which encloses the arrangement and which includes a hole therein to provide communication with the high pressure area.

Two holding elements and associated sealing members may be mounted side by side to seal two high pressure areas between the components.

Axially outboard of the holding element, or a pair of holding elements may be located a pair of oil seals to prevent ingress of oil into the high pressure area or areas.

Each oil seal may have its own outer fixing structure for easy mounting in its operational position.

The invention also provides a vehicle tyre pressure changing system which uses a seal arrangement as described above.

The holding element can be designed as a sleeve abutting on the housing structure for the seal, preferably wherein the abutment body has a foot-like enlargement which is preferably integrally moulded to the sleeve. These embodiments are particularly suitable for arranging a plurality of rotary seals designed according to the invention fixed opposite one another between the machine components. For example, four rotary seals formed according to the invention can be used in pairs mirror-symmetrically with respect to one another, in order to seal off a paired rotary feed-through. In this way, a multiple rotary seal of this kind can be easily fitted between the two machine components.

If two rotary seals are preferably mirror-symmetrically arranged around the, or a, rotary feed-through area, the rotary feed-through area will be reliably sealed off on both sides.

The invention will be explained in more detail below by means of exemplary embodiments with reference to the drawings.
Figure 1 shows an embodiment of a rotary seal arrangement according to the invention in a cross-section.
Figure 2 shows a paired rotary feed-through with a rotary seal arrangement according to the invention.
Figures 3a to 3f show embodiments of rotary seals of a rotary seal arrangement according to the invention.
Figure 4 shows part of a rotary seal arrangement according to the invention.
Figure 5 shows part of a further form of rotary seal arrangement according to the invention.

The illustrations in the drawings show the subject-matter according to the invention very schematically and are not to be interpreted as being to scale. The individual components of the subject-matter according to the invention are illustrated so that their construction can be shown well.

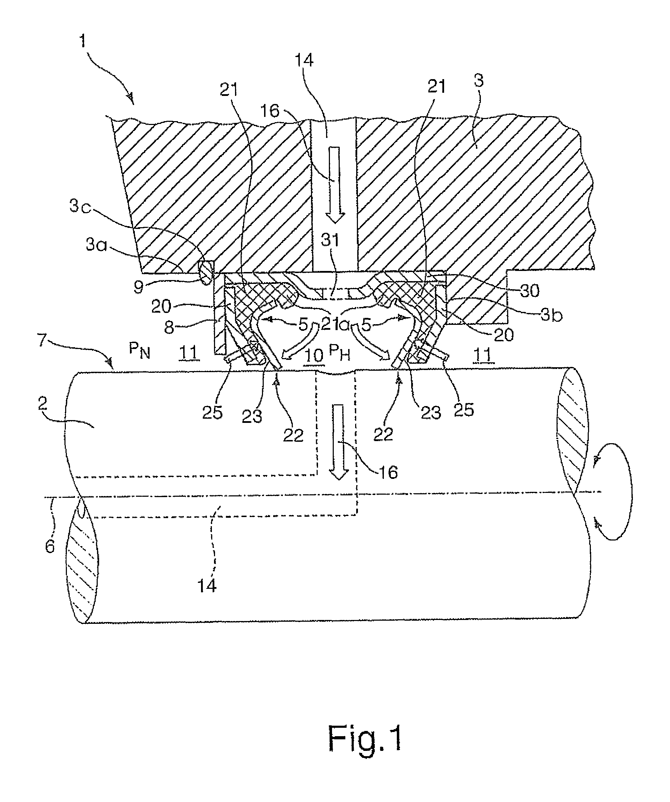

In Figure 1 an embodiment of a rotary seal arrangement 1 according to the invention is illustrated in a cross-section. Rotary seals 5 are fitted between a rotatable component in the form of a wheel drive shaft 2 and a component forming a support for the rotatable shaft 2 in the form of a vehicle axle housing 3. The seals 5 have a ring-shaped form which is symmetrical to the shaft centre. The rotatability of the shaft is represented in the figure by a curved double arrow X. The rotational symmetry axis 6 of the rotary seals 5 coincides with the rotational axis of the shaft.

The seals 5 are inserted in a housing structure formed in axle housing 3. This housing structure may simply be a surface on which the seal is positioned. The shaft 2 has a surface forming a sealing area 7. The seating of the rotary seals 5 is secured by a washer 8, which in turn is fixed by means of a spring ring 9 engaging in a groove 3c.

A high-pressure area 10, formed as a rotary feed-through area between housing 3 and shaft 2 is sealed off against a low-pressure area 11 by means of the seals 5. Through the rotary feed-through area 10 a fluid, such as high pressure air, which is under excess pressure compared to the low-pressure area 11 with the low pressure P_{N}, can be conducted from the housing 3 through the sealing area 7 into the rotatable shaft 2. The low pressure P_{N} can, for example, be the normal atmospheric pressure. In addition, a hole 14 is provided in the fixed component 3, which leads into the rotary feed-through area 10. The rotatable component 2 also has holes 14 which lead into the rotary feed-through area 10 and connect the rotary feed-through area 10 for feeding through the fluid to a shaft end of the rotatable machine component 2. Thus, the fluid can be conducted from the fixed machine component 3 through the holes 14 into the rotatable machine component 2, which is represented in the figure by arrows 16.

There are two rotary seals 5 arranged mirror-symmetrically around the high-pressure area 10 or the rotary feed-through area. Each of the rotary seals 5 has a support element 20 which is essentially rigid and essentially arranged in a stable position with respect to the first machine component 3, an abutment body 21 which can be deformed in a rubbery-elastic manner and is adjacent to the support element 20 on the rotary feed-through area side, and a sealing ring 23 which has a sealing edge 22 and loosely abuts on the abutment body 21. The sealing ring 23 is thus not firmly connected to the abutment body 21 but only abuts on it. Intermediate spaces can also be present. The support element 20 is a component which is separate from the machine components 2, 3. The sealing edge 22 of the sealing rings 23 is in each case arranged on a load area of the respective sealing ring 23 protruding beyond the support element 20 and the abutment body 21, lying in between, in the direction of the sealing area 7. In particular, the position of this load area varies when pressure is applied in the high-pressure area 10. The load area is thus deformed, when pressure is applied, in such a way that the sealing edge 22 is pressed against the sealing area 7.

The sealing rings 23 are pushed away in each case from the sealing area 7 by the associated abutment body 21. The latter is represented by arrows 25 in the figure. The pushing away action occurs by means of the rubbery-elastic properties of the abutment bodies 21. The sealing rings 23 in each case have a cross-section which is at a concave angle to the rotary feed-through area 10. The rotary feed-through area 10 is thereby bounded by the sealing rings 23 and the sealing area 7 in such a way that an obtuse angle exists between the rotary feed-through side surfaces of the sealing rings 23 and the sealing area 7. The abutment bodies 21 are supported against the respectively associated supporting element 20.

If a fluid under high pressure P_{H} is introduced into the rotary feed-through area 10, then, as represented by curved arrows in the figure, a force is exerted on the rotary feed-through area side surfaces of the sealing rings 23. This force leads to the abutment bodies 21 being compressed against their inner rubbery-elastic actuating forces pushing the sealing ring 23 away from the sealing area 7. As a result, the sealing edges 22 are pressed onto the sealing area 7, so that the rotary feed-through area 10 is sealed off essentially leakage-free against the low-pressure area 11.

In the illustrated embodiment, a holding element 30, made of steel for example, is provided for fixing the position of the rotary seals 5 in the housing structure for the seal. The two rotary seals 5 are arranged in a stable position with respect to one another by the holding element 30 and the support elements 20 which are bonded to the resilient abutment bodies 21 to form a cartridge-like arrangement. Thus, a seal pair is easily assembled into the operational position in component 3. The holding element 30 forms a sleeve engaging the housing structure bore 3a for the seal, and each of the abutment bodies 21 has a foot-like enlargement 21 a which is integrally moulded to the sleeve 30. The sleeve 30 has a hole 31 in the region of the rotary feed-through area 10, so that the fluid can flow through the hole 31 of the sleeve 30. The entire seal contained between the support elements 20 and sleeve 30 is held against a simple shoulder 3b on component 3 by the simple spring ring 9 which engaged groove 3c. No complex sealing surfaces are required for mounting the entire seal in its operational position.

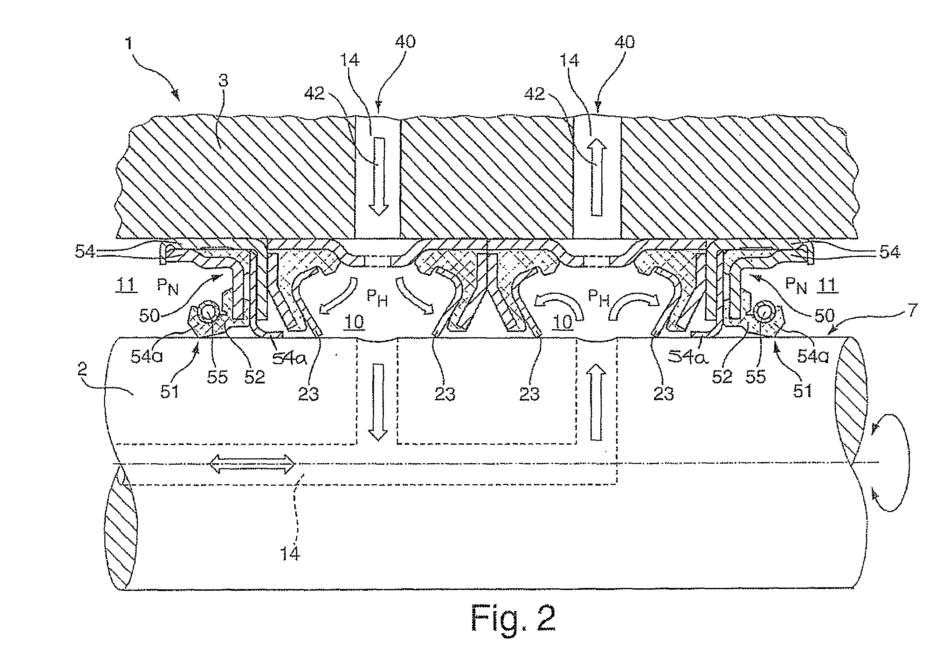

In Figure 2, a paired rotary feed-through having a rotary seal arrangement 1 according to the invention is illustrated, as is applicable in particular for use in a tyre pressure variation system. A paired rotary feed-through is understood to mean a rotary feed-through arrangement, in which two rotary feed-throughs 40, sealed against each other and against at least one low-pressure area 11, are present with their respective associated rotary feed-through areas 10. The rotary feed-through areas 10 are also here at least periodically under high pressure P_{H} compared to the low pressure P_{N} available in the low-pressure area 11. As a result, a fluid (such as air) can be conducted in a controlled manner from the fixed machine component 3 into the machine component 2, rotatable therein, and conducted out again. By way of example, in addition flow directions 42 of the fluid in holes 14 connected to the rotary feed-through areas 10 into the machine components 2, 3 are represented by arrows. In the second rotatable machine component 2, two holes 14 separate from one another are present, i.e. a separate channel is formed for each rotary feed-through, which is simply represented by a double arrow in the figure. The rotary seal arrangement components corresponding to Figure 1 are indicated with the same reference symbols in figure 2.

Each of the rotary feed-through areas 10 is sealed off against the low-pressure area 11 by means of a seal pair according to Figure 1.

In addition to the illustration in Figure 1, a lubricating seal 50 is provided in each case between the low-pressure area 11 and the seal pairs, though which penetration of lubricant from the low-pressure area 1 into the rotary feed-through areas 10 is prevented. The latter is particularly necessary if the pressure of the fluid in one of the rotary feed-through areas 10 is not sufficient to press the sealing rings 23, which are associated with the corresponding seal pair, sufficiently strongly against the sealing area 7.

The lubricating seals 50 in each case have rubbery-elastic seal bodies 52, in each case having a sealing lip 51, and fixing structures 54 fixing the seal bodies 52. The sealing lips 51 are pressed against the sealing area 7 by means of spring rings 55 made, for example, of steel. The angularly formed element 54a, which reaches up to the sealing area 7 between the fixing structures 54 in each case forms an additional, particularly tightly jammed sealing ring, e.g. made of PTFE.

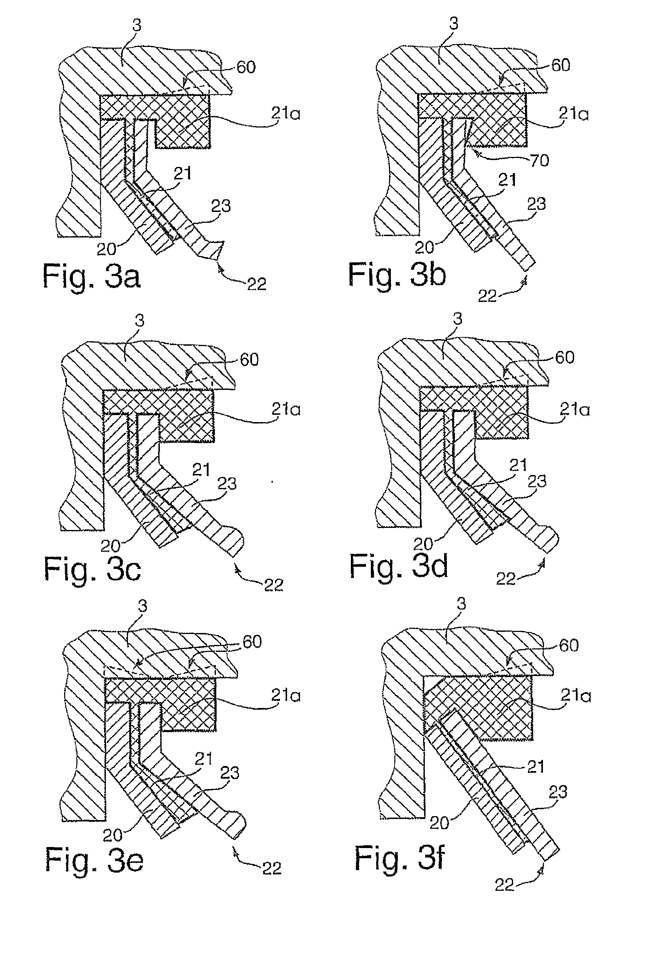

In Figures 3a to 3f, axial cross-sections of different embodiments of rotary seals of a rotary seal arrangement according to the invention are illustrated. The embodiments essentially correspond to the rotary seal according to Figure 1. Therefore, only special details are concentrated on below. In the figures, the rotary arrangement seal components corresponding to Figure 1 are indicated with the same reference symbols. The abutment bodies 21 of the illustrated rotary seals in each case have a foot-like enlargement 21 a on the housing structure side for the seal. The abutment body extends in the radial direction of the rotary seal 5 between the sealing ring 23 and the housing structure for the seal, and the abutment body 21 has an area which is adjacent to the sealing ring 23 on the high-pressure area side in the axial direction of the rotatably supported machine component 2. The latter area stretches to different extents in the direction of the sealing edge. In this way, the edge of the sealing ring 23 facing radially away from the sealing area is arranged in a recess of the abutment body 21.

The abutment bodies 21 in each case have at least one pointed end 60 on the housing side for the seal. These ends 60 are in each case pressed against the housing structure for the seal in such a way that the abutment body 21 is elastically deformed and the sealing ring 23 is thereby pre-stressed. The latter is represented by the dashed outline of the ends 60. The edge of the sealing ring 23 facing radially away from the sealing area is also, thereby, in each case elastically jammed in the recess in the abutment body 21. In Figure 3b, an edge 70 bridging a gap is formed as a result. The illustrated rotary seals also differ in the formation of the support elements 20, the sealing rings 23 and the areas of the abutment bodies 21 lying in between.

In Figures 3a to 3e, the support elements 20, the sealing rings 23 and the areas of the abutment bodies 21 laying in between in each case have a cross-section which is at a concave angle to the high-pressure area. In the exemplary embodiments of Figures 3c to 3e, the area of the abutment body 21, arranged between the support element 20 and the sealing ring 23, is thereby conically widened in the direction of the sealing edge. In Figure 3f, the cross-section of the support element 20, the sealing ring 23 and the area of the abutment body 21 lying in between is, in contrast, not angled.

The sealing ring 23 being pre-stressed radially in the direction of the second machine component 2 (not illustrated) in each case by an elastic restoring force of the abutment body 21 is common to all the illustrated embodiments. Due to the fact that in each case at least in one supporting area the support element 20 runs at an angle to the axial direction of the rotatably supported machine component (not illustrated), the abutment body 21 is compressed in this area between the support element 20 and the sealing ring by the said pre-stressing. As a result, the sealing ring 23 is in turn pushed away from the sealing area in the supporting area by the abutment body 21. The abutment body 21 is thereby in each case arranged radially between the respective support element 20 and the associated sealing ring 23.

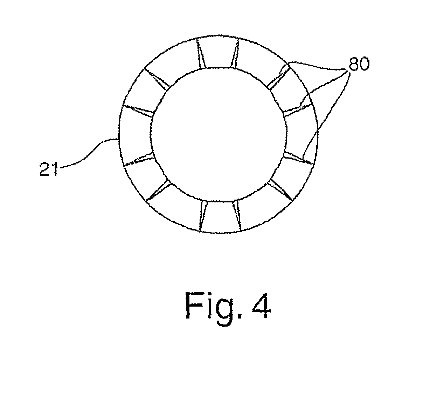

In Figure 4, an embodiment of an abutment body 21 of a rotary seal arrangement according to the invention is illustrated in an axially directed plan view. The sealing ring side surface of the abutment body 21 is therefore shown. Although the abutment body can also have a level surface on the sealing ring side, in this exemplary embodiment the surface has projections 80 in the direction of the sealing ring, so that a gap also remains between the abutment body 21 and the sealing ring when the abutment body 21 is compressed.

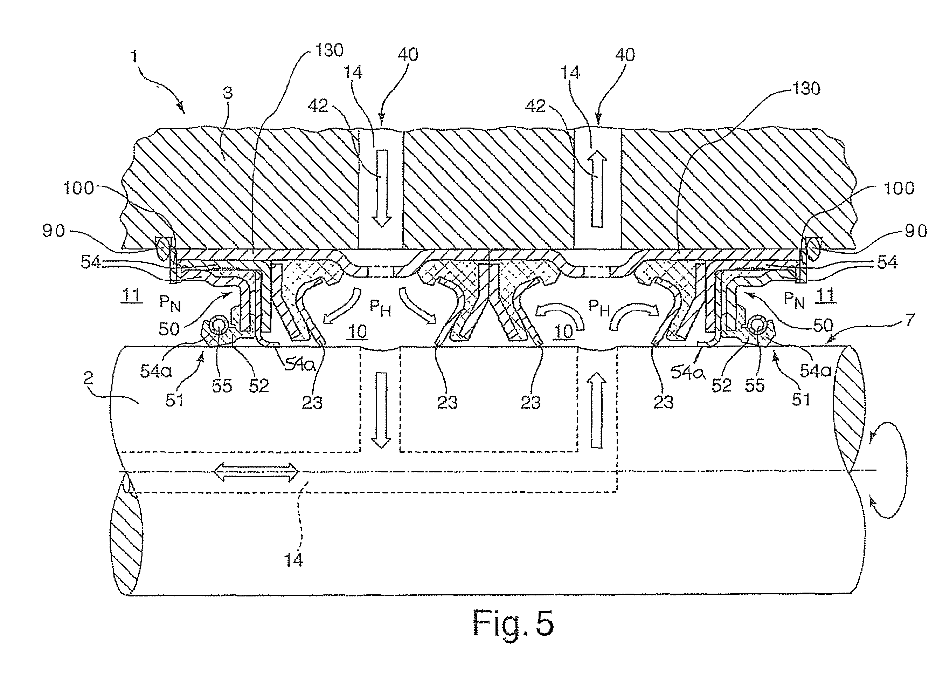

Figure 5 shows an alternative embodiment of the invention described in Figure 2 whereby similar numbers are unaltered.
Lubricating seals 50 are also fixed in holding element 130. The seating of the holding element 130 is secured by a washer 100, which in turn is fixed by means of a spring ring 90 engaging in respective grooves.

The present invention provides a rotary sealing arrangement which with its use of the holding element 30 enables the entire sealing arrangement required to seal a high pressure area between relatively rotatable components to be mounted in position as a single cartridge-like component on simple mating surfaces on the two relatively rotatable components. This greatly simplifies production of the mating surfaces on the relatively rotatable components and ensures that no components of the sealing arrangement are left out when the sealing arrangement is mounted in its operating position.

The invention is not restricted to the abovementioned specified exemplary embodiments. In fact, a number of alternatives are conceivable, which also make use of the features of the invention in a basically different implementation.

## Claims

1. A rotary seal arrangement for a rotatable component (2) located in a machine component (3), and wherein the sealing arrangement acts to seal off a high-pressure area (10) between the components (2, 3) to allow the passage of high pressure fluid therebetween, the seal arrangement comprising a holding element (30) for mounting in the machine component (3) to support spaced sealing members (23) therein to define said high pressure area (10) therebetween and support elements (20) which extend generally radially relative to the rotatable component (2) to provide support for the sealing members (23) against the high pressure fluid, wherein the holding element (30) and support elements (20) form a cartridge like arrangement which encloses the sealing members (23) and **characterized in that** axially outboard of the holding element (30), or a pair of holding elements (30), a pair of oil seals (50) is located to prevent ingress of oil into said high pressure area or areas (10).

2. A seal arrangement according to Claim 1 **characterised in that** the rotatable component (2) is formed as a rotatable shaft supported in the machine component (3), wherein the holding element (30) and sealing members (23) are arranged around the shaft.

3. A seal arrangement according to claim 1 or 2 **characterised in that** the holding element (30) and support elements (20) are held together in the cartridge-like arrangement by resilient abutment bodies (21) located between each sealing member (23) and its associated support element (20), the abutment bodies being bonded to the holding element (30) and the associated support elements (20).

4. A seal arrangement according to any one of claims 1 to 3 **characterised in that** the holding element (30) is a sleeve-like element which encloses the arrangement and which includes a hole (31) therein to provide communication with the high pressure area (10).

5. A seal arrangement according to any one of claims 1 to 4 **characterised in that** two holding elements (30) and associated sealing members (23) are mounted side by side to seal two high pressure areas (10) between the components (2, 3).

6. A seal arrangement according to any preceding claim **characterised in that** each oil seal (50) has its own outer fixing structure (54) for easy mounting in its operational position.

7. A seal arrangement according to claim 5 **characterised in that** each oil seal (50) is mounted on the same holding element (130) as the adjacent spaced sealing members (23).

8. A vehicle tyre pressure changing system which uses a seal arrangement according to any one of claims 1 to 7.

## Patentansprüche

1. Rotations-Dichtungsanordnung für ein drehbares Bauteil (2), das in einem Maschinenbauteil (3) angeordnet ist, und wobei die Dichtungsanordnung dazu dient, einen Hochdruckbereich (10) zwischen den Bauteilen (2, 3) abzudichten, um den Durchtritt von Hochdruckfluiden zwischen diesen zu ermöglichen, wobei die Dichtungsanordnung ein Halteelement (30) aufweist, welches zum Montieren in dem Maschinenbauteil (3) bestimmt ist, um darin beabstandete Dichtelemente (23) abzustützen zwecks Vorgabe des Hochdruckbereichs (10) zwischen diesen, und die Dichtungsanordnung Stützelemente (20) aufweist, die sich im Wesentlichen radial in Bezug auf das drehbare Bauteil (2) erstrecken, um eine Abstützung für die Dichtelemente (23) gegen das Hochdruckfluid bereitzustellen, wobei das Halteelement (30) und die Stützelemente (20) eine hülsenartige oder behälterartige Anordnung bilden, die die Dichtelemente (23) umschließt, **dadurch gekennzeichnet, dass** axial außerhalb des Halteelements (30) oder eines Paars von Halteelementen (30) ein Paar von Öldichtungen (50) angeordnet ist, um ein Eindringen von Öl in den Hochdruckbereich oder Hochdruckbereiche (10) zu verhindern.

2. Dichtungsanordnung nach Anspruch 1, **dadurch gekennzeichnet, dass** das drehbare Bauteil (2) als drehbare Welle ausgebildet ist, die in dem Maschinenbauteil (3) abgestützt ist, wobei das Halteelement (30) und Dichtelemente (23) um die Welle angeordnet sind.

3. Dichtungsanordnung nach Anspruch 1 oder 2, **dadurch gekennzeichnet, dass** das Halteelement (30) und die Stützelemente (20) in der hülsenartigen oder behälterartigen Anordnung durch nachgiebige Widerlagerkörper (21) zusammengehalten werden, die zwischen jedem Dichtungselement (23) und seinem zugeordneten Stützelement (20) angeordnet sind, wobei die Widerlagerkörper mit dem Halteelement (30) und den zugeordneten Stützelementen (20) verbunden sind, insbesondere stoffschlüssig verbunden sind.

4. Dichtungsanordnung nach einem der Ansprüche 1 bis 3, **dadurch gekennzeichnet, dass** das Halteelement (30) ein hülsen- oder manschettenartiges Element ist, das die Anordnung umschließt und das eine Ausnehmung (31) aufweist, um eine Verbindung mit dem Hochdruckbereich (10) bereitzustellen.

5. Dichtungsanordnung nach einem der Ansprüche 1 bis 4, **dadurch gekennzeichnet, dass** zwei Halteelemente (30) und zugeordnete Dichtungselemente (23) Seite an Seite montiert sind, um zwei Hochdruckbereiche (10) zwischen den Bauteilen (2, 3) abzudichten.

6. Dichtungsanordnung nach einem der vorhergehenden Ansprüche, **dadurch gekennzeichnet, dass** jede Öldichtung (50) ihre eigene äußere Befestigungsstruktur (54) für ein einfaches Montieren in ihrer Betriebsposition aufweist.

7. Dichtungsanordnung nach Anspruch 5, **dadurch gekennzeichnet, dass** jede Öldichtung (50) an dem gleichen Halteelement (130) montiert ist wie die benachbarten beabstandet angeordneten Dichtungselemente (23).

8. Fahrzeugreifen-Druckwechselsystem, das eine Dichtungsanordnung nach einem der Ansprüche 1 bis 7 nutzt.

## Revendications

1. Agencement d'étanchéité tournant pour un composant pouvant tourner (2) situé dans un composant de machine (3), et dans lequel l'agencement d'étanchéité permet d'assurer l'étanchéité d'une zone à haute pression (10) entre les composants (2, 3) afin de permettre le passage d'un fluide à haute pression entre les deux, l'agencement d'étanchéité comprenant un élément de retenue (30) pour assurer le montage dans le composant de machine (3) de manière à supporter des éléments d'étanchéité (23) espacés à l'intérieur pour définir ladite zone à haute pression (10) entre les deux et des éléments de support (20) qui s'étendent sensiblement radialement par rapport au composant pouvant tourner (2) pour fournir un support aux éléments d'étanchéité (23) contre le fluide à haute pression, dans lequel l'élément de retenue (30) et les éléments de support (20) forment un agencement du type en cartouche qui enveloppe les éléments d'étanchéité (23), et **caractérisé en ce que**, axialement à l'extérieur de l'élément de retenue (30) ou d'une paire d'éléments de retenue (30), une paire de joints à huile (50) est agencée de manière à empêcher l'introduction d'huile dans ladite ou lesdites zones à haute pression (10).

2. Agencement d'étanchéité selon la revendication 1, **caractérisé en ce que** le composant pouvant tourner (2) est réalisé sous la forme d'un arbre pouvant tourner supporté dans le composant de machine (3), dans lequel l'élément de retenue (30) et les éléments d'étanchéité (23) sont agencés autour de l'arbre.

3. Agencement d'étanchéité selon la revendication 1 ou 2, **caractérisé en ce que** l'élément de retenue (30) et les éléments de support (20) sont maintenus ensemble dans l'agencement en forme de cartouche par des corps de butée élastiques (21) situés entre chaque élément d'étanchéité (23) et son élément de support associé (20), les corps de butée étant liés à l'élément de retenue (30) et aux éléments de support associés (20).

4. Agencement d'étanchéité selon l'une quelconque des revendications 1 à 3, **caractérisé en ce que** l'élément de retenue (30) est un élément en forme de manchon qui enveloppe l'agencement et qui comporte à l'intérieur un orifice (31) pour assurer une communication avec la zone à haute pression (10).

5. Agencement d'étanchéité selon l'une quelconque des revendications 1 à 4, **caractérisé en ce que** deux éléments de retenue (30) et des éléments d'étanchéité (23) associés sont montés côte à côte pour assurer l'étanchéité de deux zones à haute pression (10) entre les composants (2, 3).

6. Agencement d'étanchéité selon l'une quelconque des revendications précédentes, **caractérisé en ce que** chaque joint à huile (50) comporte sa propre structure de fixation externe (54) pour faciliter le montage dans sa position opérationnelle.

7. Agencement d'étanchéité selon la revendication 5, **caractérisé en ce que** chaque joint à huile (50) est monté sur le même élément de retenue (130) que les éléments d'étanchéité (23) adjacents espacés.

8. Dispositif de modification de pression de pneu de véhicule qui utilise un agencement d'étanchéité selon l'une quelconque des revendications 1 à 7.
